Europäisches Patentamt

European Patent Office

Office européen des brevets

(11) Publication number: **0 408 390 A1**

# (12) EUROPEAN PATENT APPLICATION

(21) Application number: 90307709.7

(22) Date of filing: 13.07.90

(51) Int. Cl.5: **C08J 5/18, C08L 77/06**

(30) Priority: 14.07.89 GB 8916221

(43) Date of publication of application:
16.01.91 Bulletin 91/03

(84) Designated Contracting States:
AT BE CH DE DK ES FR GB GR IT LI LU NL SE

(71) Applicant: Du Pont Canada Inc.
Box 2200, Streetsville Postal Station
Mississauga, Ontario L5M 2H3(CA)

(72) Inventor: Lee, Hyo-Chul
834, Attersley Drive
Oshawa, Ontario L1K 1T9(CA)
Inventor: Climenhage, David Charles
RR, no. 2
Orono, Ontario L0B 1M0(CA)
Inventor: Farkas, Nicholas
1029 Pinewood Place
Kingston, Ontario K7P 1K9(CA)
Inventor: Markiewicz, Stan John
123 Jones Court
Whitby, ,Ontario L1N 6JN(CA)

(74) Representative: Harrison, David Christopher
et al
MEWBURN ELLIS 2 Cursitor Street
London EC4A 1BQ(GB)

(54) Thermoformable nylon film.

(57) A deep draw thermoformable film is disclosed, suitable for packaging purposes, e.g. packaging turkey and the like. The film comprises A) extruding into film form a blend of polyamide resins comprising a) a thermoplastic semi-crystalline polyamide of film-forming molecular weight, made from an aliphatic aminoacid having from 6 to 12 carbon atoms, e.g. nylon 6, from an aliphatic dicarboxylic acid and an aliphatic diamine, each having from 6 to 12 carbon atoms, e.g. nylon 6,6 or from mixtures of said semi-crystalline polyamides, and b) a thermoplastic amorphous copolyamide consisting essentially of i) 40 to 98 mole % units of isophthalic acid based on the total acids present, ii) 2 to 60 mole % units of terephthalic acid based on the total acids present, iii) 50 to 100 mole % of units of hexamethylene diamine based on total amines present and iv) 0 to 50 mole % of at least one aliphatic diamine containing between 8 and 20 carbon atoms and containing at least one cyclohexane moiety, based on the total amines present, wherein the amorphous copolyamide is present in amount of from 5 to 15 wt.% of the blend, B) rapidly cooling the extruded film and C) annealing the film, to form a substantially unoriented film of from 38 to 125 µm in thickness.

EP 0 408 390 A1

# THERMOFORMABLE NYLON FILM

The present invention relates to a nylon film which is useful for deep draw thermoforming operations, and preferably thermoforming operations where the draw is about 60 to 150 mm deep. In particular the invention relates to a thermoformable film made from a blend of an amorphous nylon and a semi-crystalline nylon.

Thermoforming with nylon films is known. Australian Patent application 25 700/88, published 1989 May 25 to Sadler et al. discloses a thermoforming film containing at least one layer of a polyamide mixture. The mixture includes at least one highly crystalline polyamide and at least one amorphous polyamide, wherein the highly crystalline polyamide content ranges from 35 to 85 wt.% of the total polyamide content. Highly crystalline polyamide films are indicated as being formed, for example, from nylon 6,6 and nylon 6 in a blown film process. An amorphous polyamide disclosed is formed from the polymerization of phthalic acid and hexamethylenediamine.

It has now been found that deep draw thermoformable films may be made from certain blends of amorphous and semi-crystalline nylons.

Accordingly the present invention provides a thermoformable substantially unoriented nylon film, from 38 to 125 $\mu$m in thickness, made from a blend of polyamide resins comprising a) a thermoplastic semi-crystalline polyamide of film-forming molecular weight, made from an aliphatic aminoacid having from 6 to 12 carbon atoms, from an aliphatic dicarboxylic acid and an aliphatic diamine, each having from 6 to 12 carbon atoms, or from mixtures of said semi-crystalline polyamides, and b) a thermoplastic amorphous copolyamide consisting essentially of i) 40 to 98 mole % units of isophthalic acid based on the total acids present, ii) 2 to 60 mole % units of terephthalic acid based on the total acids present, iii) 50 to 100 mole % of units of hexamethylene diamine based on total amines present and iv) 0 to 50 mole % of at least one aliphatic diamine containing between 8 and 20 carbon atoms and containing at least one cyclohexane moiety, based on the total amines present, wherein the amorphous copolyamide is present in amount of from 5 to 15 wt.% of the blend.

In one embodiment the thermoformable film is part of a composite film web, especially a web in which the thermoformable film is laminated to a heat sealable film.

In another embodiment the heat sealable film is a polyethylene, especially a linear low density polyethylene film.

In yet another embodiment the semi-crystalline polyamide includes nylon 6, nylon 6,6, nylon 6,9, nylon 6,10, nylon 6,12, nylon 12,12, and blends or copolymers thereof.

In a further embodiment the semi-crystalline polyamide is nylon 6, nylon 6,6, blends thereof, or copolymers of caprolactam and hexamethyleneadipamide.

The semi-crystalline polyamide may be made from acid-forming and amine-forming derivatives of said acids and amines, e.g. esters, amine salts and the like. Examples of such acids include adipic acid, azelaic acid, sebacic acid, and dodecanoic acid. Examples of such amines include hexamethylene diamine and octamethylene diamine.

Nylon 6 having an relative viscosity in the range of 2.5 to 6.0 may be used as the semi-crystalline polyamide. It is preferred that the relative viscosity be in the range of 2.5 to 3.5. Relative viscosity is measured by comparing the viscosity, at 25°C, of a solution 1 g of the nylon 6 dissolved in 100 ml sulphuric acid (95 wt.% acid to 5 wt.% water) to the viscosity, at 25°C of the sulphuric acid by methods known in the art.

In flat film processes, an especially preferred semi-crystalline polyamide is nylon 6,6 having a relative viscosity (RV) in the range of from 25 to 150, particularly from 45 to 60. Relative viscosity is the ratio of viscosity at 25°C of an 8.4 wt.% solution of nylon in 90 wt.% formic acid (90 wt.% acid to 10 wt.% water) to the viscosity at 25°C of the 90 wt.% formic acid alone. The semi-crystalline polyamide may be a blend of different polyamides e.g. nylon 6 and nylon 6,6 or a copolymer of nylon 6 and nylon 6,6.

The amorphous copolyamide preferably comprises 60 to 90 mole % units of isophthalic acid, 10 to 40 mole % units of terephthalic acid, 80 to 100 mole % units of hexamethylene diamine and 0 to 20 mole % units of at least one aliphatic diamine containing between 8 and 20 carbon atoms and containing at least one cyclohexane moeity. The amorphous copolyamides exhibit melt viscosities at 280°C of less than 1000 Pa.s measured at a shear rate of $10^2$ to 105 s$^{-1}$. Examples of suitable aliphatic diamines include 1-amino-3-aminomethyl3,5,5-trimethyl-cyclohexane, 1,4-bis(aminomethyl)cyclohexane and bis(p-aminocyclohexyl)-methane.

The thermoformable film of the present invention may contain additives, fillers and the like, such as glass, mica, dyes, heat stabilizers, antioxidants, plasticizers, UV stabilizers and slip additives, e.g. slip additives containing silica.

The semi-crystalline and amorphous polyamides may be made by known methods, and similarly mixing of the polyamides and/or the copolyamides may be accomplished using known methods. The mixtures may then be formed into film in accordance with the process of the present invention.

The thermoformable film of the present invention may be prepared by extruding the blend of polyamides through a flat film die, rapidly cooling the film and preferably annealing the film. The film may also be prepared by extruding the blend in a molten state through a circular die, in a so-called blown film process, rapidly cooling the extruded blend to form film while expanding the extruded blend at a blow-up ratio of less than about 3.0:1, and subsequently annealing the film, e.g. at a temperature of from 10 to 100°C.

In a preferred blown film process the extruded film is cooled using an internal or external cooling mandrel.

In processes wherein a flat film die is used, rapid cooling of the film may be effected by passing the film over a chill roll. The lower the temperature of the chill roll, the better from the standpoint of increasing the extensibility of the film, and thus the more suitable the film is as a deep draw thermoformable film. In order to effect annealing, it is desirable to have a second roll, which is known as the annealing roll. The chill roll is the primary means of quenching the polyamide film and has the greatest effect on extensibility of the film. It has also been found that the film should not be cooled too much if the film is to be subsequently laminated, because the film may be too extensible for the laminating process to be carried out efficiently.

It is often desirable for the thermoformable film to be a composite film web, in which there is also a heat sealable and /or a gas barrier layer in addition to the layer made from the polyamide blend. It is especially desirable for the polyamide layer to be in combination with a heat sealable film material. For example, the thermoformable polyamide film may be laminated to a heat sealable film, the polyamide blend material may be coextruded with a heat sealable material, or the thermoformable polyamide film may be extrusion coated with a heat sealable material.

In one embodiment the heat sealable film is a polyethylene, especially a linear low density polyethylene film.

Laminated thermoformable film webs useful in the present invention may be made by conventional techniques of adhesive lamination. The laminates may be made from one layer of a sealant film adhesively laminated to the thermoformable film of the present invention. The film may also be made by adhesively laminating outer sealant films to a central film of the thermoformable film of the present invention.

Composite thermoformable film webs may also be made from coextrusions. The structure of the webs may comprise one or more sealant layers, one or more functional layers, e.g. barrier layers and/or tie layers, and one layer of the thermoformable film of the present invention.

Preferred sealant films are polyethylene films, ethylene/vinyl acetate copolymer films, films of blends of at least one polyethylene and ethylene/vinyl acetate copolymer, and films of ethylene/acrylic acid copolymer, ethylene/methacrylic acid copolymer, ionomers derived from ethylene/methacrylic acid copolymers and blends thereof with a polyethylene. Especially preferred films are those made from polyethylene.

In another embodiment the films of the present invention may also include a barrier layer, especially one made from ethylene/vinyl alcohol copolymer or polyvinylidene chloride copolymer.

The laminates or coextrusions referred to above are particularly suitable for packaging processed meats.

In one embodiment the thermoformable film composite is a laminate or coextrusion made from a low density polyethylene layer (sealant layer), and a 60 to 85 μm thick cast film made from 85 to 95 wt.% of nylon 6,6 and 5 to 15 wt.% of the amorphous polyamide. In another embodiment the nylon/amorphous polyamide film is sandwiched between two layers of the polyethylene. The thickness of the polyethylene will be selected by criteria known to those skilled in the art.

In another embodiment the thermoformable film composite comprises a coextrusion of polyethylene and an ethylene/methacrylic acid copolymer and an ionomer derived from an ethylene/methacrylic acid copolymer laminated to an unoriented 60 to 85 μm thick film made from 85 to 95 wt.% nylon 6,6 and 15 to 5 wt.% amorphous copolyamide. The thickness of the polyethylene will be selected by criteria known to those skilled in the art.

Based on thermomechanical analyses of the films of the present invention it is surprising that such films may be laminated in heated-oven processes without excessive extension of the film being evident.

The films of the present invention and the composites webs made therewith may be used in conventional thermoforming or deep draw thermoforming operations to make, for example, pouches which hold the contents, e.g. processed meats. Deep draw thermoforming is differentiated from thermoforming most commonly used in that deep draw thermoforming refers to thermoforming into cavities of from about 60 mm in depth. In one deep draw thermoforming process, a) film is preheated in a forming die, b) a vacuum is applied in the forming die, optionally with a plug assist, to conform the heated film to a mould in the die, so that the film forms the lower portion of a pouch, c) the film is cooled by the mould surface, d) the lower portion of the pouch so thermoformed is moved to a sealing die where processed meat is placed inside the lower portion of the pouch, e) the pouch is purged using a suitable gas, and f) a top web of film is placed on top of the lower portion of the pouch and heat sealed thereto.

Films with a potential for good thermoformability are typically characterized by low crystallinity, a high thermal mechanical analysis rate of stretching, low pouch failure rates, increased pouch volume and improved pouch formation and clarity characteristics, and in certain instances high shrinkage after forming, filling and heating.

The invention is illustrated by reference to the examples which follow. In some of the the examples a MULTIVAC (trade mark) machine was used to measure pouch forming failure rate over fifty machine cycles, i.e. two pouches per cycle. The contact plate heater temperature was variously kept at 80, 100, 120 or 140°C. Additionally the pouches were measured for pouch volume and visually inspected for pouch shape and quality. Total cycle times were typically set at 7 seconds, with a preheat time setting of about 3 seconds and a vacuum setting of about 1 second. Pouch shrinkage was also measured, by leaving the formed pouch in the warm pouch forming cavity of the thermoforming machine for 5 minutes and then measuring pouch volume. Typically only single layers, e.g. not laminates or coextrusions with other materials, of the nylon film were tested using the MULTIVAC machine.


EXAMPLE I

A composition comprising 10 wt.% amorphous copolyamide A and 90 wt.% semi-crystalline polyamide B were melt blended and extruded to form film having a thickness of 76 μm. The compositions were extruded using a WERNER & PFLIEDERER (trade mark) 53 mm extruder equipped with a flat film die. The extrudate was deposited onto a chill roll kept at a temperature of 60°C. The thus cooled film was then contacted with an annealing roll held at 60°C, before being wound up on a wind-up roll.

Amorphous copolyamide A comprised a copolymer containing hexamethylene diamine/isophthalic acid comonomer and hexamethylene diamine/terephthalic acid comonomer in the weight ratio of 70:30 The amorphous copolyamide A had a density of 1.18 g/cm$^3$ and a glass transition temperature of 127°C. The semi-crystalline polyamide was a nylon 6,6 having a relative viscosity of 52.

Film made from the composition containing 10 wt.% amorphous copolyamide A are referred to herein as Film W.

Samples of Film W were tested for pouch volumes after forming into pouches with a MULTIVAC thermoforming machine at 100°C, and further tested for pouch shrinkage after 5 minutes. Pouch volume for Film W was 520 cm$^3$ upon forming. After the 5 minute shrinkage test period the pouch volume was 460 cm$^3$, i.e. a shrinkage of 12%. These results may be compared to results for commercially available nylon 6 wherein pouch volumes are about 475 cm$^3$, and nylon 6,6 wherein pouch volumes are typically 505 to 520 cm$^3$, and pouch shrinkages are 1 to 5%.

Samples of the films were laminated to a coextruded sealant film, about 225 μm in thickness, comprising polyethylene, ionomer and ethylene/methacrylic acid copolymer. The laminated films were thermoformed using a TIROMAT (trade mark) thermoforming machine to form pouches suitable for packaging turkey parts. Twenty pouches were formed using each laminate. The turkey parts were manually placed into the formed pouches, and a 100 μm thick non-forming top web was vacuum sealed to the formed pouch. The sealed pouches were passed through a hot water tunnel to pre-shrink the pouches around the meat. The pouches were then cooked overnight in a steam-heated oven. A similar test was conducted with a laminate of 76 μm thick nylon 6,6 film and a 225 μm thick coextruded film, for comparison purposes.

For the comparative film laminate, the pouch, after the pre-shrink cycle, had wrinkles on the floor of the pouch and the package was loose around the meat. After cooking, the pouch had tightened up but it was still a bit loose around the meat. In contrast, the laminate made with Film W produced much tighter pouches, both after the pre-shrink cycle and after the cooking cycle. The results indicate that in this particular end-use application, the laminate with Film W gave a desirably higher shrinkage than the comparative nylon film, and resulted in tighter pouches for turkey packages.

EXAMPLE II

The same composition comprising 10 wt.% amorphous copolyamide A and 90 wt.% semi-crystalline polyamide B as used in Example I was extruded into film form, having a film thickness of 76 μm. The chill roll temperature was 58°C and the anneal roll temperature was 67°C. Samples of the film were used to thermoform pouches on a MULTIVAC in-line roll-fed thermoforming machine, at various thermoforming temperatures. In the following examples the fast cycle time was set at 4 seconds and the slow cycle time was set at 9 seconds. Some of the results for pouch appearance (App), pouch volume (Vol) and % snap back (shrinkage) (% SB) are shown in Table 2 below:

Table 2

| Forming Temp. (°C) | Total Cycle Time | | | | | |
|---|---|---|---|---|---|---|
| | 4 s | | | 9 s | | |
| | App* | Vol | % SB | App* | Vol | % SB |
| 40 | A | | | B | | |
| 60 | B | | | D | 570 ml | 25 |
| 80 | D | 630 ml | 32 | C | 520 ml | 15 |
| 100 | C | 550 ml | 13 | C | 520 ml | 15 |

* A = no forming; B = borderline forming, 100% poppers; C shallow pouches, rounded at corners; D pouches much better defined, pouch shoulder very sharp, 0% poppers.

Surprisingly, these results show that the composition of this example can be made to deep draw thermoform as well as compositions containing 20-30 wt.% amorphous copolyamide A.

EXAMPLE III

Further films were made from the composition of Example I and tested for thermoforming performance, by measuring extensibility and popper frequency.

Thermomechanical analysis (TMA) is used to determine the rate of stretch of the film. In the TMA tests a 2.5 mm by 2.5 mm piece of film is heated at a rate of 10°C/min and a stretching load of 2 g/μm of film thickness is applied, in order to measure the rate of stretch of the film sample. The results for nylon 6,6 and of the composition of Example I (Blend), cast to 76 μm thickness, are shown in Table 3.

Table 3

| Film | TMA slope (%extensibility/°C) | |
|---|---|---|
| | Between 80-100°C | Between 120-140°C |
| Nylon 6,6 | - | 0.36 |
| Blend | 0.38 | 0.63 |

The values are the average of several samples. The results show that at 120-140°C a 10 wt.% addition of an amorphous copolyamide greatly increases the extensibility and that at 80-100°C the extensibility is similar to that of nylon 6,6 at a much higher temperature.

Further samples of film, cast to 76 μm thickness, were also tested on a MULTIVAC thermoforming machine. The total cycle times were 7 seconds, with a heating cycle of 3 seconds and a vacuum cycle of 1 second. The popper frequencies are shown in Table 4.

Table 4

| % amorphous copolyamide in nylon 6,6 | % Poppers | | | |
|---|---|---|---|---|
| | Forming Temperature (°C) | | | |
| | 80 | 100 | 120 | 140 |
| 0 | 10-28 | 18 | 45-90 | 95-100 |
| 10 | 2-4 | 4-12 | 22-45 | 60-95 |

The values show the ranges measured for several samples. With 10 wt.% amorphous polyamide, a significant reduction in popper frequency is noted at all temperatures, compared to the performance of nylon 6,6. It is believed that results under 10% are believed give acceptable, commercially. Hence, in this instance it is shown that the blend with 10 wt.% amorphous copolyamide performs acceptably in the 80-100°C forming range.

**Claims**

1. A thermoformable film comprising a blend of polyamide resins comprising a) a thermoplastic semi-crystalline polyamide of film-forming molecular weight, made from an aliphatic aminoacid having from 6 to 12 carbon atoms, from an aliphatic dicarboxylic acid and an aliphatic diamine, each having from 6 to 12 carbon atoms, or from mixtures of said semi-crystalline polyamides, and b) a thermoplastic amorphous copolyamide consisting essentially of i) 40 to 98 mole % units of isophthalic acid based on the total acids present, ii) 2 to 60 mole % units of terephthalic acid based on the total acids present, iii) 50 to 100 mole % of units of hexamethylene diamine based on total amines present and iv) 0 to 50 mole % of at least one aliphatic diamine containing between 8 and 20 carbon atoms and containing at least one cyclohexane moiety, based on the total amines present, wherein the amorphous copolyamide is present in amount of from 5 to 15 wt.% of the blend, said film being a substantially unoriented film of from 38 to 125 µm in thickness.
2. A film according to Claim 1 wherein the semi-crystalline polyamide is selected from the group consisting of nylon 6, nylon 6,6, nylon 6,9, nylon 6,10, nylon 6,12, nylon 12,12, blends thereof and copolymers thereof.
3. A film according to Claim 2 wherein the semi-crystalline polyamide is nylon 6,6.
4. A film of claim 1, 2 or 3 wherein the film forms a part of a composite with at least one other layer selected from the group consisting of a sealant layer and a barrier layer.
5. A process for preparing a deep draw thermoformable film comprising A) extruding into film form a blend of polyamide resins comprising a) a thermoplastic semi-crystalline polyamide of film-forming molecular weight, made from an aliphatic aminoacid having from 6 to 12 carbon atoms, from an aliphatic dicarboxylic acid and an aliphatic diamine, each having from 6 to 12 carbon atoms, or from mixtures of said semi-crystalline polyamides, and b) a thermoplastic amorphous copolyamide consisting essentially of i) 40 to 98 mole % units of isophthalic acid based on the total acids present, ii) 2 to 60 mole % units of terephthalic acid based on the total acids present, iii) 50 to 100 mole % of units of hexamethylene diamine based on total amines present and iv) 0 to 50 mole % of at least one aliphatic diamine containing between 8 and 20 carbon atoms and containing at least one cyclohexane moeity, based on the total amines present, wherein the amorphous copolyamide is present in amount of from 5 to 15 wt.% of the blend, B) rapidly cooling the extruded film and C) annealing the film, to form a substantially unoriented film of from 38 to 125 µm in thickness.
6. A process according to Claim 5 wherein the semi-crystalline polyamide is selected from the group consisting of nylon 6, nylon 6,6, nylon 6,9, nylon 6,10, nylon 6,12, nylon 12,12, blends thereof and copolymers thereof.
7. A process of claim 5 or claim 6 wherein the blend is extruded through a flat film die, rapidly cooling the extruded film to a temperature of from about 25 to 100°C and subsequently annealing the film at a temperature of from about 40 to 100°C.

8. A process of claim 5 or claim 6 wherein the blend is extruded in a molten state through a circular die, in a blown film process, rapidly cooling the extruded blend to form film while expanding the extruded blend at a blow-up ratio of less than about 3.0:1, and subsequently annealing the film at a temperature of from 10 to 100°C.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| X | EP-A-0 065 278 (FELDMÜHLE A.G.) <br> * Claims * | 1-8 | C 08 J 5/18 <br> C 08 L 77/06 |
| X | WPIL FILE SUPPLIER, accession no. 85-168470, Derwent Publicatons Ltd, London, GB; & JP-A-60 097 850 (MITSUBISHI PLASTICS) 31-05-1985 <br> * Whole abstract * | 1-8 | |
| P,X | EP-A-0 358 038 (VISKASE CORP.) <br> * Claims * | 1-8 | |
| A | JP-A-1 006 056 (MITSUBISHI KASEI)(10-01-1989) <br> * Whole abstract * | | |
| A | FR-A-2 348 805 (TOYO BOSEKI K.K.) | | |

TECHNICAL FIELDS SEARCHED (Int. Cl.5)

C 08 J
C 08 L

The present search report has been drawn up for all claims

| Place of search | Date of completion of the search | Examiner |
|---|---|---|
| THE HAGUE | 01-10-1990 | VAN GOETHEM G.A.J.M. |